# EUROPÄISCHE PATENTSCHRIFT

(11) **EP 0 579 023 B1**
(45) Veröffentlichungstag und Bekanntmachung des Hinweises auf die Patenterteilung: **07.05.1997**
(21) Anmeldenummer: 93110307.1
(22) Anmeldetag: 29.06.1993
(51) Int. Cl.: H04B 10/16

(54) **Optisches Nachrichtenübertragungssystem mit optischem Filter zum Schutz vor Riesenimpulsen**
Optical signal transmission system with an optical filter attaining a protection against giant impulses
Système de transmission d'informations optiques avec filtre optique pour protéger contres les très grandes impulsions

(30) Priorität: 07.07.1992 DE 4222208
(43) Veröffentlichungstag der Anmeldung: 19.01.1994
(73) Patentinhaber: Alcatel SEL Aktiengesellschaft, D-70435 Stuttgart (DE)
(72) Erfinder: Veith, Gustav, Dr., W-7254 Hemmingen (DE)
(74) Vertreter: Kugler, Hermann, Dipl.-Phys.

(56) Entgegenhaltungen:
- EP-A- 0 409 012
- EP-A- 0 457 349
- EP-A- 0 458 256
- IEEE - JOURNAL OF LIGTWAVE TECHNOLOGY; Band 7, Nr. 5, Mai 1989, New York E. DESURVIRE AND J.R. SIMPSON ' Amplification of Spontaneous Emission in Erbium-Doped Single-Mode Fibers'

## Beschreibung

Die Erfindung betrifft ein optisches Nachrichtenübertragungssystem nach dem Oberbegriff des Anspruchs 1. Solche Systeme sind hinreichend bekannt. Ein solches System wird beispielsweise in Wedding, B.; et al; "10 GBit/s To
260 000 Subscribers Using Optical Amplifier Distribution Network"; Contribution for ICC/Supercom'92, Optical Communications 300 Level Session "Impact of Optical Amplifiers on Network Architectures", gezeigt. Den faseroptischen Verstärker im Detail zeigt beispielsweise EP 0 457 349 A2.

In dem oben erwähnten System besteht die Gefahr, daß bei Unterbrechung der Lichtwellenleiterstrecke, beispielsweise durch Faserbruch, Impulse hoher Energie emittiert werden. Diese Riesenimpulse entstehen dadurch, daß mit Unterbrechung der Lichtwellenleiterstrecke die Eingangsleistung auf Null absinkt und das von der spontanten Emission herrührende Licht an der Trennstelle reflektiert wird.

Genauer läßt sich dies wie folgt beschreiben: Da der Pumpvorgang unabhängig von der Eingangsleistung ist, wird auch bei abgefallener Eingangsleistung in das Verstärkungsmedium ständig Energie gepumpt; es kommt zur völligen Besetzungsinversion. Durchläuft reflektiertes Licht das verstärkende Lichtwellenleiterstück, dessen laseraktive Substanz sich im invertierten Zustand befindet, wird die gespeicherte Energie schlagartig freigesetzt. Es kommt zur Emission von Riesenimpulsen, die eine Gefahr für Systemkomponenten, beispielsweise Photodetektoren, darstellen.

Vergleichbar einem Effekt, der von Festkörperlasern wohlbekannt ist, wird für die Riesenimpulsemission auch der Begriff des Q-Switching oder der Güte-Schaltung verwendet. Für Halbleiterlaser beschreibt diesen Effekt z.B. Petermann, U.; "Laser Diode Modulation a Noise"; Kluwer Academic Publishors, UT K Scientific Publisher, Tokyo 1988.

Vergleiche auch IEEE-Journal of Lightwave Technology, Band 7, Nr.5, Mai 1989, New York E.Desurvire and J.R.Simpson: "Amplification of Spontaneous Emission in Erbium-Doped Single-Mode Fibers", seiten 835-845.

Es ist die Aufgabe der Erfindung, ein optisches Nachrichtenübertragungssystem der eingangs genannten Art anzugeben, bei dem die mit Riesenimpulsen verbundene Gefahr vermieden wird.

Um diese Aufgabe erfindungsgemäß lösen zu können, ist die Wellenlänge des optischen Signals so zu wählen, daß sie außerhalb des Wellenlängebereichs der maximalen Verstärkung des faseroptischen Verstärkers liegt, wo die Riesenimpulsemission auftritt. In bekannten Systemen wird oft versucht, die Wellenlänge des optischen Signals in diesen Wellenlängenbereich zu legen.

Die Aufgabe wird wie in Patentanspruch 1 angegeben gelöst. Weiterbildungen ergeben sich aus den Unteransprüchen.

Die Erfindung wird nun anhand der Zeichnungen näher erläutert. Es zeigen:
- Fig. 1: ein Ausführungsbeispiel einer übertragungsstrecke mit faseroptischem Verstärker und erfindungsgemäßem optischen Filter,
- Fig. 2: ein Emissionsspektrum eines faseroptischen Verstärkers,
- Fig. 3: eine Filtercharakteristik eines optischen Kantenfilters und eines Bandpaßfilters,
- Fig. 4: einen wellenlängenselektiven Schmelzkoppler mit Koppelcharakteristik.

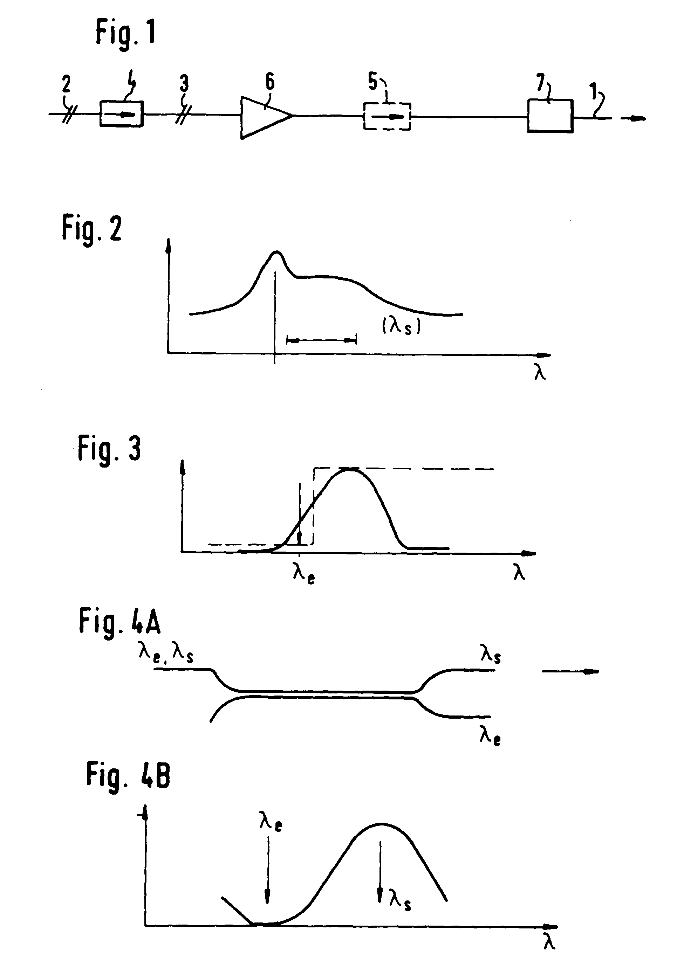

In Fig. 1 ist ein Teil einer optischen Nachrichtenübertragungsstrecke, die über einen Lichtwellenleiter 1 führt, mit einem bekannten faseroptischen Verstärker 6 gezeigt.

In bekannten Systemdarstellungen wird am Ausgang des faseroptischen Verstärkers ein optischer Isolator 5 gezeigt. Er schützt den faseroptischen Verstärker vor Rückwirkungen von der nachfolgenden Lichtwellenleiterstrecke oder Verstärkerstufe. Für die Erfindung ist dieser Sachverhalt jedoch nicht von Bedeutung.

Ein optischer Isolator 4 am Eingang des faseroptischen Verstärkers kann das Entstehen von Riesenimpulsen dann verhindern, wenn die Unterbrechung der Lichtwellenleiterstrecke am Ort 2 erfolgt. In diesem Fall verhindert er, daß sich verstärkte spontane Emission (engl.: ASE = Amplified Spontaneous Emission) aus dem verstärkenden Faserstück entgegen der Übertragungsrichtung ausbreiten kann. Diese Emission gelangt somit nicht an den Ort der Unterbrechung des Lichtwellenleiters und wird somit auch nicht reflektiert. Wird jedoch der optische Isolator 4 aus Kostengründen eingespart oder erfolgt die Unterbrechung am Ort 3, kommt es zu einer Reflexion von verstärkter spontaner Emission. Diese Reflexion löst, wie bereits erwähnt, die Freisetzung der im invertierten Verstärkungsmedium gespeicherten Energie aus. Die entstehenden Impulse sind dabei umso ausgeprägter, je größer die zeitliche Änderung der reflektierten Leistung ist oder je schneller die Reflexionsstelle entsteht. Die erfindungsgemäße Ergänzung des optischen Nachrichtenübertragungssystems besteht aus einem optischen Filter 7, dessen Wirkungsweise in Zusammenhang mit Fig. 2 erläutert wird.

Fig. 2 zeigt das aufgenommene (optische) Spektrum der verstärkten spontanen Emission (in Fig. 2 als ASE-Spektrum bezeichnet) mit der überlagerten Spektrallinie des durch die Rückreflexion induzierten Riesenimpulses. Das Maximum des ASE-Spektrums erscheint im Fall des Erbium-dotierten faseroptischen Verstärkers bei 1532 nm. Man erkennt, daß der Riesenimpuls im Maximum des ASE-Spektrums auftritt. Dies ist physikalisch dadurch begründet, daß dort das Medium den größten optischen Gewinn hat.

Aufgrund der Erkenntnis, daß das Impulsspektrum sehr schmalbandig im Bereich um 1532 nm auftritt, wird Licht dieses Wellenlängenbereichs erfindungsgemäß mittels eines optischen Filters 7 an der Ausbreitung in dem Lichtwellenleiter gehindert. Dieses optische Filter hat im Wellenlängenbereich der maximalen Verstärkung des faseroptischen Verstärkers, im Bereich um 1532nm, einen Sperrbereich. Da das Impulsspektrum eine sehr schmale Bandbreite hat, wird dem Impulsspektrum im folgenden die Wellenlänge λₑ des Impulses zugeordnet.

Ausschlaggebend für den Einsatzort des optischen Filters ist die Frage, welche Einrichtungen des Übertragungssystems geschützt werden sollen. In der Praxis werden die faseroptischen Verstärker auch kaskadiert eingesetzt. Um ein Aufschaukeln des Riesenimpulses zu verhindern, kann das optische Filter 7 nach jedem faseroptischen Verstärker eingesetzt werden. Gilt es den Photodetektor zu schützen, ist das optische Filter 7 so in die Lichtwellenleiterstrecke einzufügen, daß der Riesenimpuls nicht auf den Photodetektor trifft. Prinzipiell kann gesagt werden, daß das optische Filter verhindern soll, daß die Energie des Riesenimpulses auf die nachfolgende Systemkomponente trifft. Das gleiche gilt sinngemäß in Rückwärtsrichtung, falls kein optischer Isolator vorhanden ist (z.B. zum Schutz des optischen Senders).

In Fig. 3 und Fig. 4 sind Ausführungsbeispiele eines optischen Filters gezeigt.

In Fig. 3 ist die Filtercharakteristik eines optischen Kantenfilters und eines Bandpaßfilters gezeigt. Der Durchlaßbereich wird so gewählt, daß das optische Signal mit der Wellenlänge λₑ durchgelassen wird. Die Wellenlänge λₑ des Impulses wird unterdrückt. Beispiele für derartige optische Filter sind Fabry-Pérot-Filter, Etalons und Absorberfilter.

Bei dem in Fig. 4A gezeigten Ausführungsbeispiel handelt es sich um einen wellenlängenselektiven Schmelzkoppler. Dieser trennt die Wellenlängen λₑ und λₛ so, daß nur die Wellenlänge λₛ des optischen Signals zum Empfänger weitergeleitet wird.

In Fig. 4B ist die Filterfunktion skizziert. Man erkennt, daß die Wellenlänge λₑ des Impulses gesperrt wird.

Eine weitere Möglichkeit, die Impulswellenlänge zu sperren, besteht darin, ein Lichtwellenleiterstück aus einem Absorbermaterial mit einem schmalen Absorptionsbereich in die Lichtwellenleiterstrecke einzufügen. Dieses kann beispielsweise ein Stück eines kristallinen, mit einem Seltenerd-Element z.B. Er³⁺, dotierten Lichtwellenleiters sein. Ein Kristalliner Er³⁺-dotierter Lichtwellenleiter hat ein sehr schmales Absorptionsband im Bereich um 1530 nm. Dieser Sachverhalt ist in der Literatur beschrieben, z.B.: H. Sange, U. Petermann, G. Huber, 1 E.W. Duczynski; "Continuous Wave 1.6 µm Laser Action in Er Doped Garnets at Room Temperature"; Applied Physics, B 49, 269-273, 1989.

Es gibt Anwendungsfälle, in denen ein spezielles optisches Filter zur Unterdrückung von Riesenimpulsen nicht erforderlich ist. Hierfür ist abschließend ein Beispiel angegeben.

In digitalen Systemen mit hoher Bitrate kann durch einen optischen Verstärker (im folgenden Vorverstärker genannt) vor dem Empfänger die Empfängerempfindlichkeit verbessert werden, wenn man zwischen Vorverstärker und Empfänger zur Rauschunterdrückung ein optisches Schmalbandfilter einsetzt.

Die Filterbandbreite dieses optischen Filters sollte idealerweise gleich der Signalbandbreite sein. Dieses optische Filter kann auch zum Schutz vor Riesenimpulsen eingesetzt werden, wenn beachtet wird, daß die Signalwellenlänge λₛ des optischen Signals nicht mit der Wellenlänge λₑ des Impulses überlappt. Somit ist kein zusätzliches optisches Filter notwendig.

## Patentansprüche

1. Optisches Nachrichtenübertragungssystem zum Übertragen eines optischen Signals über einen Lichtwellenleiter mit mindestens einem faseroptischen Verstärker (6),
**dadurch gekennzeichnet,**
daß die Wellenlänge des optischen Signals außerhalb des Wellenlängenbereichs der maximalen Verstärkung des faseroptischen Verstärkers liegt und daß ein optisches Filter (7), das im Wellenlängenbereich maximaler Verstärkung des faseroptischen Verstärkers einen Sperrbereich hat, vor oder hinter mindestens einem faseroptischen Verstärker (6) vorhanden ist.

2. Optisches Nachrichtenübertragungssystem nach Anspruch 1, dadurch gekennzeichnet, daß das optische Filter (7) ein wellenlängenselektiver Faserschmelzkoppler ist.

3. Optisches Nachrichtenübertragungssystem nach Anspruch 1, dadurch gekennzeichnet, daß das optische Filter (7) ein Lichtwellenleiterstück aus einem Absorbermaterial mit einem schmalen Absorptionsbereich ist.

## Claims

1. An optical transmission system for transmitting an optical signal over an optical fiber conttaining at least one fiber-optic amplifier (6),
**characterized in**
that the wavelength of the optical signal lies outside the wavelength region of the maximum gain of the fiber-optic amplifier, and that an optical filter (7) having a stop band in the wavelength region of the maximum gain of the fiber-optic amplifier (6) is provided before or after at least one fiber-optic amplifier (6).

2. An optical transmission system as claimed in claim 1, characterized in that the optical filter (7) is a wavelength-selective fused fiber coupler.

3. An optical transmission system as claimed in claim 1, characterized in that the optical filter (7) is a length of optical fiber made of an absorbing material with a narrow absorption band.

## Revendications

1. Système de télécommunication optique pour la transmission d'un signal optique par l'intermédiaire d'une fibre optique avec au moins un amplificateur à fibres optiques (6), caractérisé par le fait que la longueur d'onde du signal optique se trouve hors de la gamme d'ondes de l'amplification maximale de l'amplificateur optique, et que le filtre optique (7), qui comporte une zone de suppression dans la gamme d'ondes de l'amplification maximale de l'amplificateur à fibres optiques, est placé avant ou derrière au moins un amplificateur à fibres optiques (6).

2. Système de télécommunication optique conformément à la revendication 1, caractérisé par le fait que le filtre optique (7) est un coupleur fusible à sélection de longueur d'onde.

3. Système de télécommunication optique conformément à la revendication 1, caractérisé par le fait que le filtre optique (7) est un morceau de fibre optique composé d'un matériau absorbant avec une bande d'absorption étroite.
